# NOUVEAU FASCICULE DE BREVET EUROPEEN

(11) **EP 3 790 359 B2**
(45) Date de publication et mention de la décision concernant l'opposition: **13.08.2025**
(45) Mention de la délivrance du brevet: 16.02.2022
(21) Numéro de dépôt: 20193936.0
(22) Date de dépôt: 01.09.2020
(51) Int. Cl.: H05B 6/12, A47J 36/24, A47J 43/28, A47J 43/044

(54) **USTENSILE DE CHAUFFAGE**
HEIZUTENSIL
HEATING UTENSIL

(30) Priorité: 03.09.2019 FR 1909687
(43) Date de publication de la demande: 10.03.2021
(73) Titulaire: SEB S.A., 69130 Ecully (FR)
(72) Inventeur: DEBEURME, Elaine, 69380 CHAZAY D'AZERGUES (FR); CORNU, Jérémy, 69007 LYON (FR); FONDEUX, Rémi, 69290 GREZIEU LA VARENNE (FR); GRIENAY, Arnaud, 69009 LYON (FR); RODELLAS, Guillaume, 69007 LYON (FR); TADLA, Jérémy, 69380 LOZANNE (FR)
(74) Mandataire: Germain Maureau

(56) Documents cités:
- WO-A1-2014/075923
- WO-A1-2014/075923
- WO-A1-2018/189209
- DE-A1- 102006 052 475
- DE-A1- 102008 054 904
- DE-A1- 102014 111 817
- DE-A1- 3 721 200
- DE-A1- 3 721 200
- DE-U1- 202007 013 204
- JP-A- 2003 272 814
- JP-A- 2003 272 814
- US-A1- 2010 000 980
- US-A1- 2010 000 980
- US-A1- 2012 000 903
- US-A1- 2014 158 698
- US-A1- 2015 327 707
- US-A1- 2015 327 707

## Description

La présente invention concerne de manière générale un ustensile de chauffage agencé pour chauffer une préparation alimentaire placée dans un récipient. En particulier, l'invention concerne un ustensile de chauffage qui permet un chauffage à partir d'une plaque de cuisson à induction.

Il est connu dans l'art antérieur des ustensiles de chauffage agencés pour être utilisés avec une plaque de cuisson à induction, tel que celui divulgué dans le document DE3721200 A1. Ce document divulgue un contenant en matériau non métallique dans lequel est plongé un dispositif récepteur pouvant être chauffé par le champ magnétique généré par un inducteur. Ce dispositif récepteur prend la forme d'une tige avec un disque métallique disposé à l'extrémité de la tige. En contrepartie, ce système passif ne procure aucune aide ou retour d'information à l'utilisateur.

Un but de la présente invention est de répondre aux inconvénients de l'art antérieur mentionnés ci-dessus et en particulier, tout d'abord, de proposer un ustensile de chauffage qui permet de chauffer une préparation alimentaire dans tout type de récipient non ferromagnétique, tout en procurant une fonction supplémentaire à la fonction de chauffe pour l'utilisateur, et sans compliquer l'utilisation.

Pour cela un premier aspect de l'invention concerne un ustensile de chauffage selon la revendication 1.

L'ustensile de chauffage selon la mise en œuvre ci-dessus est à utiliser avec une plaque de cuisson à induction, et comprend :
- un récepteur électrique qui peut procurer une fonction supplémentaire ou complémentaire au chauffage et apporter ainsi une aide à l'utilisateur, et
- un dispositif de conversion qui génère du courant électrique en coopération avec la plaque de cuisson à induction et alimente le récepteur électrique, ce qui permet de procurer la fonction supplémentaire sans compliquer l'utilisation. En effet, avec le dispositif de conversion, l'ustensile de chauffage est complètement autonome pour fonctionner.

Avantageusement, ledit au moins un récepteur électrique comprend au moins un capteur agencé pour mesurer une température de la préparation alimentaire. Un tel capteur de température permet de connaître la température réelle de la préparation culinaire.

Avantageusement, ledit au moins un récepteur électrique comprend au moins un module de communication sans fil, agencé pour établir une connexion sans fil avec la plaque de cuisson à induction et/ou un appareil distant. Un tel dispositif de communication sans fil (par ondes radio, selon un protocole ou une norme WiFi ou Bluetooth^{®} par exemple) permet de rendre l'ustensile de chauffage communicant de sorte à apporter des fonctions et/ou aides supplémentaires à l'utilisateur.

Avantageusement, le module de communication sans fil est agencé pour envoyer au moins une information de température de la préparation alimentaire ou une consigne de commande à un dispositif de pilotage de la plaque de cuisson à induction de manière à obtenir une régulation en température sur la base d'une température de consigne définie directement ou indirectement à partir d'une interface utilisateur disposée sur la plaque de cuisson à induction et/ou sur l'ustensile de chauffage et/ou sur un équipement tiers comme un terminal externe (un smartphone ou une tablette par exemple). Selon cette mise en œuvre, le dispositif de chauffage et son capteur de température font partie d'une chaine de régulation qui permet de piloter le chauffage en boucle fermée et prenant compte la température de la préparation alimentaire elle même. La température de consigne peut être définie directement ou indirectement, c'est-à-dire soit en valeur numérique (85°C... 100°C), soit par un intitulé de programmation (« Bouillir », « Thé », « Café », « Émulsion »). On peut également prévoir de piloter l'ustensile de chauffage et/ou la plaque de cuisson à induction depuis un téléphone portable.

Le récepteur électrique comprend au moins une unité de commande et au moins un actionneur. Un tel actionneur permet d'effectuer une opération (par exemple mécanique) sur la préparation alimentaire, ce qui procure une fonction de préparation supplémentaire autonome.

Avantageusement, l'unité de commande est connectée au capteur de température, pour piloter ledit actionneur en fonction de la température de la préparation alimentaire.

Avantageusement, ledit au moins un actionneur comprend un moteur électrique accouplé à un organe de préparation, tel qu'un dispositif ou disque mousseur ou un mélangeur. Un dispositif ou disque mousseur permet de faire mousser du lait par exemple. On peut aussi mélanger la préparation alimentaire, pour faire des sauces ou faire fondre du chocolat.

Avantageusement, l'ustensile de chauffage comprend une pompe agencée pour générer un flux dans la préparation alimentaire ou boisson. Un tel flux peut être un remuage ou un mélange, ou encore un pompage pour transférer du liquide d'un premier endroit à un deuxième endroit.

### Avantageusement, la pompe est une pompe électrique

Avantageusement, la pompe est une pompe thermique agencée pour convertir de l'énergie thermique en énergie mécanique et qui comprend :
- une chambre de chauffe dans laquelle est disposée l'au moins une portion de chauffe et comprenant au moins un clapet mobile entre une première position ouverte dans laquelle la préparation alimentaire ou boisson, disposée dans le récipient peut s'écouler de l'extérieur vers l'intérieur de la chambre de chauffe et une deuxième position fermée dans laquelle la boisson ne peut pas ou plus s'écouler de l'intérieur vers l'extérieur de la chambre de chauffe,
- au moins une cheminée pour acheminer la boisson selon un flux ascendant sous l'effet de la pression s'exerçant sur la boisson dans la chambre de chauffe,
- un panier dans lequel débouche la cheminée et agencé pour recevoir une mouture de café, de thé, ou de tisane à infuser par la boisson transitant par la cheminée pour se déverser dans le panier.

La pompe thermique selon la mise en œuvre ci dessus fonctionne sur le principe de la convection et le mouvement du liquide est créé automatiquement par le chauffage. Le clapet peut être positionné pour s'ouvrir automatiquement lorsque le courant convectif s'installe, c'est-à-dire par différence de pression, ou peut être commandé électriquement, en étant alimenté par le dispositif de conversion.

Avantageusement, le dispositif de conversion du dispositif électrique comprend au moins une bobine. Le dispositif de conversion est un dispositif à induction, agencé pour être excité ou induit par la plaque de cuisson à induction.

Avantageusement, le dispositif électrique comprend des moyens de stockage d'énergie électrique, tels qu'au moins une batterie. Une telle batterie permet de stocker le courant généré par le dispositif de conversion s'il n'y a pas de besoin en énergie, et le restituer lors de forte demande. Une telle batterie peut être une batterie chimique, ou un condensateur.

Avantageusement, l'ustensile de chauffage comprend au moins une poignée.

Avantageusement, le dispositif électrique comprend au moins une interface homme machine, telle qu'un écran d'affichage. Un tel écran, alimenté de manière autonome par le dispositif de conversion, améliore sensiblement l'ergonomie et le confort d'utilisation de l'ustensile de chauffage. Il peut être prévu d'afficher par exemple la température de la préparation alimentaire, ou des étapes/consignes de préparation.

Avantageusement, l'ustensile de chauffage comprend une unité de détection d'un courant induit, et des moyens d'information du niveau de courant induit. En particulier, on peut prévoir un circuit de détection de courant dans l'ustensile de chauffage qui compare avec un seuil attendu de courant. Si le courant mesuré est inférieur, alors un signal (par exemple une led rouge) indique que l'ustensile de chauffage n'est pas bien centré / positionné sur la plaque de cuisson à induction, si le courant dépasse le seuil, alors le signal (la LED devient verte) indique que l'ustensile de chauffage est bien centré et que le courant induit est satisfaisant.

Un deuxième aspect de l'invention concerne un système de chauffage, comprenant :
- un ustensile de chauffage selon le premier aspect de l'invention,
- un récipient en matériau non ferromagnétique,
- une plaque de cuisson à induction.

Avantageusement, le système comprend un terminal externe, tel qu'un téléphone portable ou une tablette.

Il est entendu que toutes les caractéristiques techniques ci-dessus peuvent être combinées entre elles ou dissociées les unes des autres tant qu'il n'y a pas d'incohérence ou incompatibilité technique.

D'autres caractéristiques et avantages de la présente invention apparaîtront plus clairement à la lecture de la description détaillée qui suit, décrivant des modes de réalisation de l'invention donnés à titre d'exemples nullement limitatifs et illustrés par les dessins annexés, dans lesquels :
- La figure 1 représente un ustensile de chauffage selon un premier mode de réalisation.
- La figure 2 représente une vue schématique de l'utilisation de l'ustensile de chauffage de la figure 1.
- La figure 3 représente une vue schématique d'une utilisation d'un ustensile de chauffage selon un deuxième mode de réalisation.
- La figure 4 représente une vue schématique d'une utilisation d'un ustensile de chauffage selon un troisième mode de réalisation, en début de chauffage.
- La figure 5 représente l'utilisation de l'ustensile de chauffage de la figure 4, en cours de chauffage.
- La figure 6 représente une plaque de cuisson à induction pouvant être utilisée avec l'ustensile de chauffage selon la présente invention.
- La figure 7 représente l'ustensile de chauffage selon le premier mode de réalisation posé sur la plaque de cuisson à induction de la figure 6.
- La figure 8 représente l'ustensile de chauffage selon le premier mode de réalisation placé dans un récipient posé sur la plaque de cuisson à induction de la figure 6.
- La figure 9 représente l'ustensile de chauffage selon le deuxième mode de réalisation.

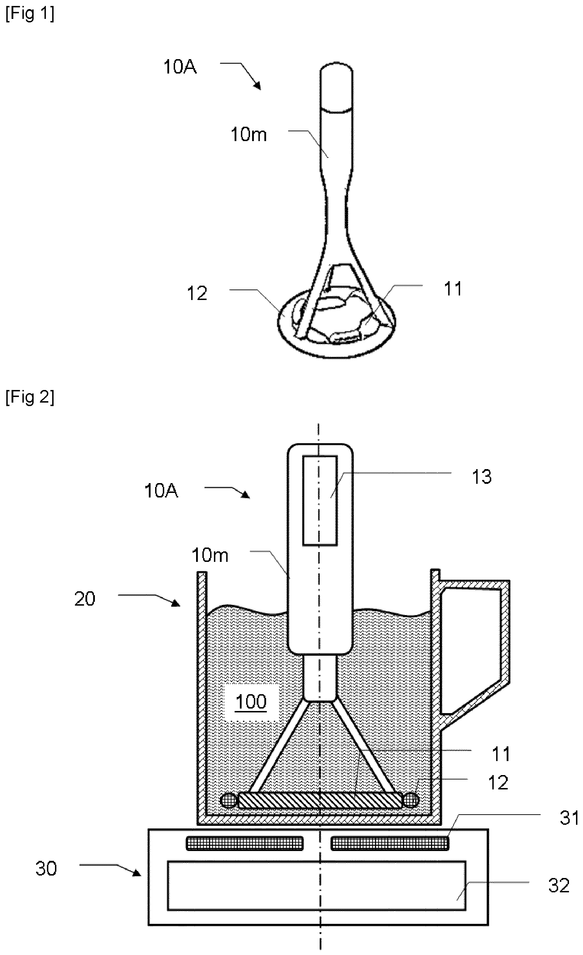

La figure 1 représente un ustensile de cuisson 10A selon un premier mode de réalisation, qui comprend un manche ou une poignée 10m, qui est connectée à une portion de chauffe 11, entourée par un dispositif de conversion 12.

Comme le montre la vue schématique de la figure 2, l'ustensile de chauffage 10A de la figure 1 peut être plongé dans un récipient 20 qui contient une préparation alimentaire 100, le récipient 20 étant lui-même posé sur une plaque de cuisson à induction 30, cette dernière comprenant une unité de commande 32 et au moins une bobine 31 pour générer des champs magnétiques.

La préparation alimentaire 100 est typiquement un liquide plus ou moins épais et peut être, de manière non limitative, une boisson, une soupe, une bouillie, un liquide, de l'eau, du café, du thé, du lait, un mélange tel que du café sucré, du chocolat au lait...

La portion de chauffe 11, en matériau ferromagnétique, est en regard de la plaque de cuisson à induction 30, si bien que des champs magnétiques générés par la plaque de cuisson 30 vont provoquer un échauffement de la portion de chauffe 11 (notamment par courants de Foucault), ce qui permet de chauffer la préparation alimentaire 100.

Par ailleurs, comme évoqué ci-dessus, l'ustensile de chauffage 10A comprend un dispositif de conversion 12, qui est agencé pour convertir en courant électrique une partie des champs magnétiques générés par la plaque de cuisson par induction 30.

De plus, l'ustensile de chauffage comprend aussi un récepteur électrique 13 alimenté par le dispositif de conversion 12. Ainsi, l'ustensile de chauffage est complètement autonome.

Dans le détail, le dispositif de conversion électrique 12 peut comprendre une bobine, préférentiellement une bobine plate qui va fonctionner comme un induit pour générer du courant à partir des champs magnétiques de la plaque de cuisson 30. En ce qui concerne le récepteur électrique, on peut prévoir un capteur de température, et par exemple un afficheur, et/ou un dispositif de communication sans fil.

Le capteur de température est prévu pour mesurer la température de la préparation alimentaire 100. A cet effet, il peut être agencé dans la partie immergée de la poignée 10m, ou dans le bras qui relient la poignée 10m à la portion de chauffe 11. L'afficheur peut quant à lui être disposé sur la partie supérieure de la poignée 10m, pour indiquer la température, à des fins d'information de l'utilisateur.

On peut aussi prévoir que le récepteur électrique comprend un dispositif de communication sans fil par ondes radio pour envoyer à un appareil électronique distant des informations relatives à la température. On peut par exemple envoyer à un téléphone portable les informations de température qui seront ensuite affichées pour l'utilisateur. On peut également envoyer ces informations de température à l'unité de commande 32 de la plaque de cuisson 30, pour commander/réguler le chauffage de manière précise en boucle fermée, en prenant en compte la température de la préparation alimentaire 100.

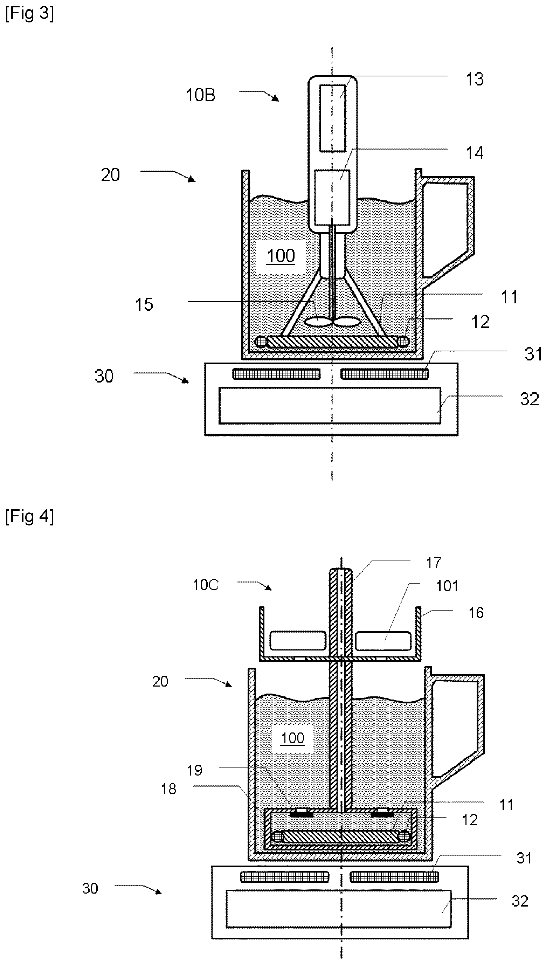

La figure 3 représente une vue schématique d'une utilisation d'un ustensile de chauffage 10B selon un deuxième mode de réalisation. En plus ou en alternative du récepteur électrique 13 du premier mode de réalisation, l'ustensile de chauffage 10B comprend un disque mousseur 15 connecté à un moteur électrique 14 alimenté par le dispositif de conversion 12. Ainsi, le disque mousseur 15, lorsqu'une température particulière est atteinte ou selon une commande temporelle, peut être mis en rotation pour mélanger ou faire mousser la préparation alimentaire qui comprend par exemple du lait. Le reste de l'ustensile de chauffage 10B (en particulier la portion de chauffe 11 et le dispositif de conversion 12 pour alimenter un récepteur électrique) et du système de chauffe étant similaire au premier mode de réalisation, cela ne sera pas décrit à nouveau.

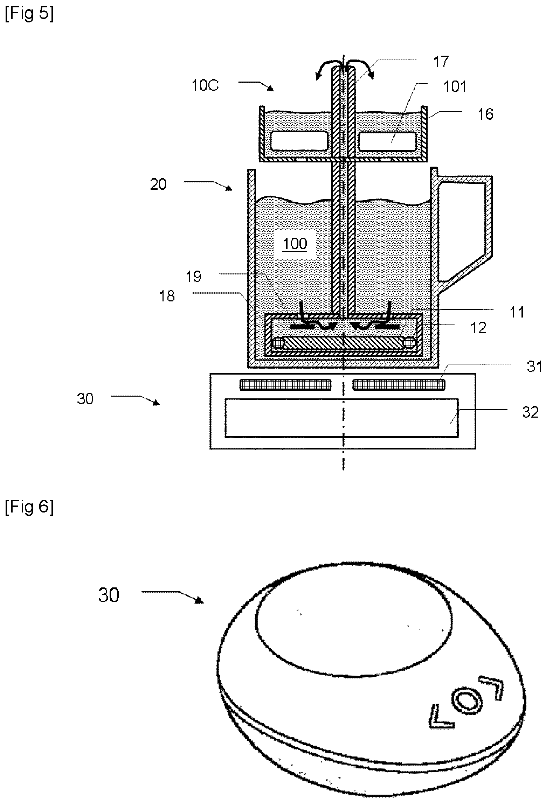

La figure 4 représente une vue schématique d'une utilisation d'un ustensile de chauffage 10C selon un troisième mode de réalisation, en début de chauffage. En plus ou en alternative du récepteur électrique 13 du premier mode de réalisation, l'ustensile de chauffage 10C comprend une pompe thermique constituée notamment par
- une chambre de chauffe 18 dans laquelle est disposée la portion de chauffe 11 et comprenant deux clapets 19 mobiles entre une première position ouverte (figure 5) dans laquelle la préparation alimentaire 100 disposée dans le récipient 20 peut s'écouler de l'extérieur vers l'intérieur de la chambre de chauffe 18 et une deuxième position fermée (figure 4) dans laquelle la boisson ne peut plus s'écouler de l'intérieur vers l'extérieur de la chambre de chauffe 18,
- une cheminée 17 pour acheminer la préparation alimentaire 100 selon un flux ascendant sous l'effet de la pression s'exerçant sur la préparation alimentaire 100 dans la chambre de chauffe 18,
- un panier 16 dans lequel débouche la cheminée 17 et agencé pour recevoir une mouture 101 de café, de thé ou de tisane à infuser par la préparation alimentaire 100 transitant par la cheminée 17 pour se déverser dans le panier 16.

Comme vu ci-dessus, la figure 4 représente le début du chauffage, avec la préparation alimentaire 100 dans la chambre de chauffe 18 encore à la même température que dans le récipient 20 : les clapets 19 sont fermés. La figure 5 représente un instant en cours du chauffage, avec la préparation alimentaire 100 dans la chambre de chauffe 18 à une température supérieure à la température de la préparation alimentaire 100 dans le récipient 20 : la préparation alimentaire 100 chaude monte dans la cheminée 17 en raison de sa faible densité, et les clapets 19 sont ouverts pour laisser pénétrer un flux ou courant de préparation alimentaire 100 dans la chambre de chauffe 18. En conséquence, un courant de convection s'installe dans la cheminée 17 et déborde dans le panier 16, pour laisser infuser la mouture 101, du café ou du thé par exemple. Le reste de l'ustensile de chauffage 10C (en particulier la portion de chauffe 11 et le dispositif de conversion 12 pour alimenter un récepteur électrique) et du système de chauffe étant similaire au premier mode de réalisation, cela ne sera pas décrit à nouveau.

La figure 6 montre un exemple de réalisation de la plaque de cuisson à induction 30, avec un boîtier, une surface de posage et une interface homme machine (ici des boutons).

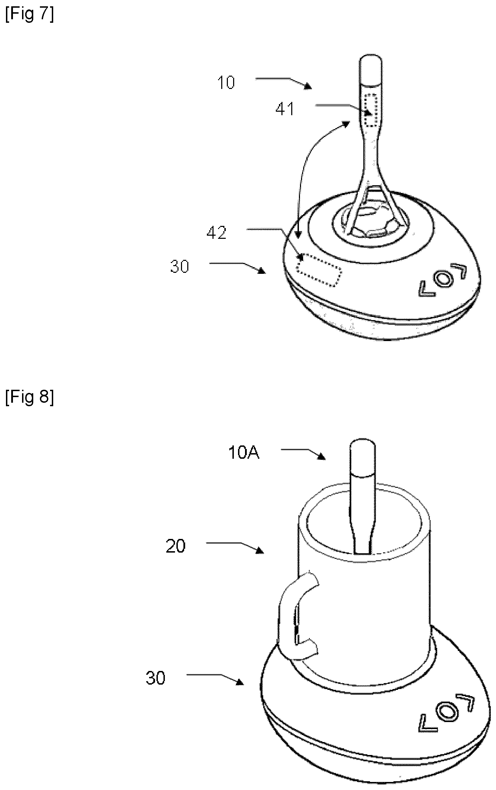

La figure 7 représente l'ustensile de chauffage 10 selon le premier mode de réalisation posé sur la surface de posage de la plaque de cuisson à induction 30 de la figure 6, de sorte à montrer les possibilités de communication. En effet, le système est équipé d'un module de communication qui comprend une première unité de communication 41 embarquée dans l'ustensile de chauffage 10 et une deuxième unité de communication 42 embarquée dans la plaque de cuisson à induction 30. Ainsi, la plaque de cuisson à induction 30 peut parfaitement recevoir des informations ou consignes de température de la préparation alimentaire, et adapter la puissance de chauffe en conséquence.

On peut aussi prévoir une communication avec un troisième appareil, tel qu'un téléphone portable ou une tablette pour piloter le chauffage. Ces possibilités de communication sont valables pour tous les modes de réalisation.

La figure 8 représente l'ustensile de chauffage 10A selon le premier mode de réalisation placé dans un récipient 20 posé sur la plaque de cuisson à induction 30 de la figure 6. Le récipient 20 est typiquement une tasse en céramique ou en faïence, ou en matière plastique. En tout état de cause, le récipient 20 n'est pas en matériau ferromagnétique.

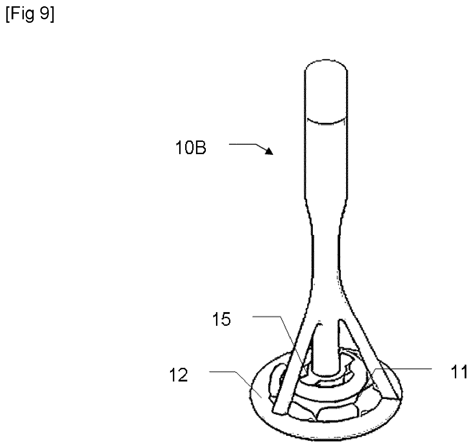

La figure 9 représente un exemple de réalisation l'ustensile de chauffage 10B selon le deuxième mode de réalisation, avec le disque mousseur 15 situé au dessus de la portion de chauffe 11.

On comprendra que diverses modifications et/ou améliorations évidentes pour l'homme du métier peuvent être apportées aux différents modes de réalisation de l'invention décrits dans la présente description sans sortir du cadre de l'invention.

## Revendications

1. Ustensile de chauffage (10A ; 10B ; 10C), agencé pour être en contact avec une préparation alimentaire (100) ou une boisson à chauffer et contenue dans un récipient (20) non ferromagnétique, l'ustensile de chauffage (10A ; 10B ; 10C) comprenant :
- au moins une portion de chauffe (11), à plonger dans le récipient (20), en matériau ferromagnétique apte à être chauffé par une plaque de cuisson à induction (30) de sorte à produire de la chaleur pour chauffer la préparation alimentaire (100),
- un dispositif électrique comprenant un dispositif de conversion (12) agencé pour convertir en courant électrique une partie des champs magnétiques générés par la plaque de cuisson à induction (30) et
- au moins un récepteur électrique (13, 14) apte à être alimenté par ce courant électrique, **caractérisé en ce que** le récepteur électrique (13, 14) comprend au moins une unité de commande et au moins un actionneur.

2. Ustensile de chauffage (10A ; 10B ; 10C) selon la revendication 1, dans lequel l'au moins un récepteur électrique (13, 14) comprend au moins un capteur agencé pour mesurer une température de la préparation alimentaire (100).

3. Ustensile de chauffage (10A ; 10B ; 10C) selon l'une des revendications 1 à 2, dans lequel l'au moins un récepteur électrique (13, 14) comprend au moins un module de communication sans fil, agencé pour établir une connexion sans fil avec la plaque de cuisson à induction (30) et/ou un appareil distant.

4. Ustensile de chauffage (10A ; 10B ; 10C) selon la revendication 3 dans sa dépendance à la revendication 2, dans lequel le module de communication sans fil est agencé pour envoyer au moins une information de température de la préparation alimentaire (100) ou une consigne de commande à un dispositif de pilotage (32) de la plaque de cuisson à induction (30) de manière à obtenir une régulation en température sur la base d'une température de consigne définie directement ou indirectement à partir d'une interface utilisateur disposée sur la plaque de cuisson à induction (30) et/ou sur l'ustensile de chauffage (10A ; 10B ; 10C) et/ou sur un équipement tiers comme un terminal externe.

5. Ustensile de chauffage (10A ; 10B ; 10C) selon la revendication 2, dans lequel l'unité de commande est connectée au capteur de température, pour piloter ledit actionneur en fonction de la température de la préparation alimentaire (100).

6. Ustensile de chauffage (10A ; 10B ; 10C) selon l'une des revendications 1 à 5, dans lequel ledit au moins un actionneur comprend un moteur électrique (14) accouplé à un organe de préparation, tel qu'un dispositif ou disque mousseur (15) ou un mélangeur.

7. Ustensile de chauffage (10A ; 10B ; 10C) selon l'une des revendications 1 à 6, comprenant une pompe agencée pour générer un flux dans la préparation alimentaire (100) ou boisson.

8. Ustensile de chauffage (10A ; 10B ; 10C) selon la revendication 7, dans lequel la pompe est une pompe électrique.

9. Ustensile de chauffage (10A ; 10B ; 10C) selon la revendication 7, dans lequel la pompe est une pompe thermique agencée pour convertir de l'énergie thermique en énergie mécanique et qui comprend :
- une chambre de chauffe (18) dans laquelle est disposée l'au moins une portion de chauffe (11) et comprenant au moins un clapet (19) mobile entre une première position ouverte dans laquelle une boisson disposée dans le récipient (20) peut s'écouler de l'extérieur vers l'intérieur de la chambre de chauffe (18) et une deuxième position fermée dans laquelle la boisson ne peut plus s'écouler de l'intérieur vers l'extérieur de la chambre de chauffe (18),
- au moins une cheminée (17) pour acheminer la boisson selon un flux ascendant sous l'effet de la pression s'exerçant sur la boisson dans la chambre de chauffe (18),
- un panier (16) dans lequel débouche la cheminée (17) et agencé pour recevoir une mouture de café, de thé, ou de tisane à infuser par la boisson transitant par la cheminée (17) pour se déverser dans le panier (16).

10. Ustensile de chauffage (10A ; 10B ; 10C) selon l'une des revendications 1 à 9, dans lequel le dispositif de conversion (12) du dispositif électrique comprend au moins une bobine.

11. Ustensile de chauffage (10A ; 10B ; 10C) selon l'une des revendications 1 à 10, dans lequel le dispositif électrique comprend des moyens de stockage d'énergie électrique, tels qu'au moins une batterie.

12. Ustensile de chauffage (10A ; 10B ; 10C) selon l'une des revendications 1 à 11, comprenant au moins une poignée (10m).

13. Ustensile de chauffage (10A ; 10B ; 10C) selon l'une des revendications 1 à 12, dans lequel le dispositif électrique comprend au moins une interface homme machine, telle qu'un écran d'affichage.

14. Système de chauffage, comprenant :
- un ustensile de chauffage (10A ; 10B ; 10C) selon l'une des revendications 1 à 12,
- un récipient (20) en matériau non ferromagnétique,
- une plaque de cuisson à induction (30).

## Patentansprüche

1. Heizutensil (10A; 10B; 10C), das dafür eingerichtet ist, mit einer Lebensmittelzubereitung (100) oder einem Getränk in Kontakt zu kommen, die beziehungsweise das erhitzt werden soll und in einem nicht ferromagnetischen Behälter (20) enthalten ist, wobei das Heizutensil (10A; 10B; 10C) Folgendes umfasst:
- mindestens einen in den Behälter (20) einzutauchenden Heizabschnitt (11) aus ferromagnetischem Material, das durch eine Induktionskochplatte (30) erhitzt werden kann, um Wärme zum Erhitzen der Lebensmittelzubereitung (100) zu erzeugen,
- eine elektrische Vorrichtung, die eine Umwandlungsvorrichtung (12) umfasst, die dafür eingerichtet ist, einen Teil der von der Induktionskochplatte (30) erzeugten Magnetfelder in elektrischen Strom umzuwandeln, und
- mindestens einen elektrischen Empfänger (13, 14), der mit diesem elektrischen Strom versorgt werden kann, **dadurch gekennzeichnet, dass** der elektrische Empfänger (13, 14) mindestens eine Steuereinheit und mindestens ein Stellglied umfasst.

2. Heizutensil (10A; 10B; 10C) nach Anspruch 1, wobei der mindestens eine elektrische Empfänger (13, 14) mindestens einen Sensor umfasst, der dafür eingerichtet ist, eine Temperatur der Lebensmittelzubereitung (100) zu messen.

3. Heizutensil (10A; 10B; 10C) nach einem der Ansprüche 1 bis 2, wobei der mindestens eine elektrische Empfänger (13, 14) mindestens ein drahtloses Kommunikationsmodul umfasst, das dafür eingerichtet ist, eine drahtlose Verbindung mit der Induktionskochplatte (30) und/oder einem Gerät in der Ferne herzustellen.

4. Heizutensil (10A; 10B; 10C) nach Anspruch 3 in Abhängigkeit von Anspruch 2, wobei das drahtlose Kommunikationsmodul dafür eingerichtet ist, mindestens eine Temperaturinformation der Lebensmittelzubereitung (100) oder einen Steuersollwert an eine Steuervorrichtung (32) der Induktionskochplatte (30) zu senden, um eine Temperaturregelung auf Basis einer direkt oder indirekt von einer an der Induktionskochplatte (30) und/oder an der Heizvorrichtung (10A; 10B; 10C) und/oder an einer Drittausrüstung wie einem externen Endgerät angeordneten Benutzeroberfläche definierten Solltemperatur zu erhalten.

5. Heizutensil (10A; 10B; 10C) nach Anspruch 2, wobei die Steuereinheit mit dem Temperatursensor verbunden ist, um das Stellglied in Abhängigkeit von der Temperatur der Lebensmittelzubereitung (100) zu steuern.

6. Heizutensil (10A; 10B; 10C) nach einem der Ansprüche 1 bis 5, wobei das mindestens eine Stellglied einen Elektromotor (14) umfasst, der mit einem Zubereitungsorgan gekoppelt ist, wie etwa einer Aufschäumvorrichtung oder - scheibe (15) oder einem Mixer.

7. Heizutensil (10A; 10B; 10C) nach einem der Ansprüche 1 bis 6, das eine Pumpe umfasst, die dafür eingerichtet ist, eine Strömung in der Lebensmittelzubereitung (100) oder dem Getränk zu erzeugen.

8. Heizutensil (10A; 10B; 10C) nach Anspruch 7, wobei die Pumpe eine elektrische Pumpe ist.

9. Heizutensil (10A; 10B; 10C) nach Anspruch 7, wobei die Pumpe eine Wärmepumpe ist, die dafür eingerichtet ist, Wärmeenergie in mechanische Energie umzuwandeln, und die Folgendes umfasst:
- eine Heizkammer (18), in der der mindestens eine Heizabschnitt (11) angeordnet ist und die mindestens eine Klappe (19) umfasst, die zwischen einer ersten offenen Position, in der ein im Behälter (20) angeordnetes Getränk von außen nach innen in die Heizkammer (18) fließen kann, und einer zweiten geschlossenen Position, in der das Getränk nicht mehr von innen nach außen aus der Heizkammer (18) fließen kann, beweglich ist,
- mindestens einen Schacht (17) zum Befördern des Getränks in einem Aufwärtsstrom unter der Wirkung des Drucks, der in der Heizkammer (18) auf das Getränk ausgeübt wird,
- einen Korb (16), in den der Schacht (17) mündet und der dafür eingerichtet ist, gemahlenen Kaffee, Tee oder Kräutertee aufzunehmen, der durch das Getränk aufgebrüht werden soll, welches durch den Schacht (17) tritt, um sich in den Korb (16) zu ergießen.

10. Heizutensil (10A; 10B; 10C) nach einem der Ansprüche 1 bis 9, wobei die Umwandlungsvorrichtung (12) der elektrischen Vorrichtung mindestens eine Spule umfasst.

11. Heizutensil (10A; 10B; 10C) nach einem der Ansprüche 1 bis 10, wobei die elektrische Vorrichtung Mittel zum Speichern von elektrischer Energie, wie mindestens eine Batterie, umfasst.

12. Heizutensil (10A; 10B; 10C) nach einem der Ansprüche 1 bis 11, das mindestens einen Griff (10m) umfasst.

13. Heizutensil (10A; 10B; 10C) nach einem der Ansprüche 1 bis 12, wobei die elektrische Vorrichtung mindestens eine Mensch-Maschine-Schnittstelle, wie etwa einen Anzeigebildschirm, umfasst.

14. Heizsystem, umfassend:
- ein Heizutensil (10A; 10B; 10C) nach einem der Ansprüche 1 bis 12,
- einen Behälter (20) aus nicht ferromagnetischem Material,
- eine Induktionskochplatte (30).

## Claims

1. Heating utensil (10A; 10B; 10C), arranged to be in contact with a food preparation (100) or a beverage to be heated and contained in a non-ferromagnetic container (20), the heating utensil (10A; 10B; 10C) comprising:
- at least one heating portion (11), to be immersed in the container (20), made of ferromagnetic material capable of being heated by an induction cooking plate (30) so as to produce heat to heat the food preparation (100),
- an electrical device comprising a conversion device (12) arranged to convert into electric current some of the magnetic fields generated by the induction cooking plate (30) and
- at least one electrical receiver (13, 14) capable of being powered by this electric current;
**Characterized in that** the electrical receiver (13, 14) comprises at least one control unit and at least one actuator.

2. Heating utensil (10A; 10B; 10C) according to claim 1, wherein the at least one electrical receiver (13, 14) comprises at least one sensor arranged to measure a temperature of the food preparation (100).

3. Heating utensil (10A; 10B; 10C) according to one of claims 1 to 2, wherein the at least one electrical receiver (13, 14) comprises at least one wireless communication module, arranged to establish a wireless connection with the induction cooking plate (30) and/or a remote appliance.

4. Heating utensil (10A; 10B; 10C) according to claim 3, dependent from claim 2, wherein the wireless communication module is arranged to send at least one item of information on the temperature of the food preparation (100) or a control setpoint to a device for controlling (32) the induction cooking plate (30) so as to obtain temperature regulation on the basis of a setpoint temperature defined directly or indirectly from a user interface arranged on the induction cooking plate (30) and/or on the heating utensil (10A; 10B; 10C) and/or on a item of third-party equipment, like an external terminal.

5. Heating utensil (10A; 10B; 10C) according to claim 2, wherein the control unit is connected to the temperature sensor, to control said actuator according to the temperature of the food preparation (100).

6. Heating utensil (10A; 10B; 10C) according to one of claims 1 to 5, wherein said at least one actuator comprises an electric motor (14) coupled to a preparation member, such as a foaming device or disc (15) or a mixer.

7. Heating utensil (10A; 10B; 10C) according to one of claims 1 to 6, comprising a pump arranged to generate a flow in the food preparation (100) or beverage.

8. Heating utensil (10A; 10B; 10C) according to claim 7, wherein the pump is an electric pump.

9. Heating utensil (10A; 10B; 10C) according to claim 7, wherein the pump is a heat pump arranged to convert the heat energy into mechanical energy and which comprises:
- a heating chamber (18) wherein is disposed the at least one heating portion (11) and comprising at least one valve (19) which is movable between a first open position in which a beverage disposed in the container (20) can flow from the outside to the inside of the heating chamber (18) and a second closed position, wherein the beverage can no longer flow from the inside to the outside of the heating chamber (18),
- at least one funnel (17) to convey the beverage according to an ascending flow under the effect of the pressure exerted on the beverage in the heating chamber (18),
- a basket (16) wherein the funnel (17) opens out, and arranged to receive coffee, tea, or herbal tea grounds to be infused through the beverage passing through the funnel (17) to be poured into the basket (16).

10. Heating utensil (10A; 10B; 10C) according to one of claims 1 to 9, wherein the conversion device (12) of the electrical device comprises at least one coil.

11. Heating utensil (10A; 10B; 10C) according to one of claims 1 to 10, wherein the electrical device comprises electric energy storage means, such as at least one battery.

12. Heating utensil (10A; 10B; 10C) according to one of claims 1 to 11, comprising at least one handle (10m).

13. Heating utensil (10A; 10B; 10C) according to one of claims 1 to 12, wherein the electric device comprises at least one man-machine interface, such as a display screen.

14. Heating system, comprising:
- a heating utensil (10A; 10B; 10C) according to one of claims 1 to 12,
- a container (20) made of non-ferromagnetic material,
- an induction cooking plate (30).
